# EUROPÄISCHE PATENTSCHRIFT

(11) **EP 0 675 911 B1**
(45) Veröffentlichungstag und Bekanntmachung des Hinweises auf die Patenterteilung: **18.07.2001**
(21) Anmeldenummer: 94903868.1
(22) Anmeldetag: 23.12.1993
(51) Int. Cl.: C08G 18/08, C08G 18/48, C08G 18/63, C08G 18/42, C08G 18/69, C09D 175/04, C09K 3/10

(54) **AUFSCHÄUMBARES ZWEI-KOMPONENTEN-MATERIAL AUF POLYURETHAN-BASIS**
FOAMABLE TWO-COMPONENT POLYURETHANE MATERIAL
MATERIAU A DEUX COMPOSANTS POUVANT ETRE TRANSFORME EN MOUSSE, A BASE DE POLYURETHANE

(30) Priorität: 24.12.1992 DE 9217694 U
(43) Veröffentlichungstag der Anmeldung: 11.10.1995
(73) Patentinhaber: H.B. FULLER LICENSING & FINANCING, INC., Saint Paul, Minnesota 55110-5132 (US)
(72) Erfinder: SCHMITZ, Franz, Peter, D-85591 Vaterstetten (DE); HOREIS, Kai, D-81549 München (DE); RAZZAK, Ramzi, D-82291 Mammendorf (DE)
(74) Vertreter: Maiwald, Walter, Dr. Dipl.-Chem.
(86) Internationale Anmeldenummer: EP9303671
(87) Internationale Veröffentlichungsnummer: WO9414865

(56) Entgegenhaltungen:
- EP-A- 0 196 852
- EP-A- 0 355 001
- EP-A- 0 380 088
- EP-A- 0 452 754
- DE-A- 4 011 060
- FR-A- 2 237 945
- GB-A- 893 075
- US-A- 4 412 013
- Becker/Braun, Kunststoff-Handbuch, 2. Aufl., Bd. 7 / Polyurethane (1983), S. 76/77

## Beschreibung

Die Erfindung betrifft ein aufschäumbares Zwei-Komponenten-Material für die Herstellung von nicht-klebenden, frei geschämmten Gegenständen auf Polyurethan-Basis mit einer Shore-A-Härte von < 30, das beispielsweise für die Erzeugung von auf einer Fläche oder in einer Nut frei geschäumten Dichtungen verwendet werden kann. Außerdem betrifft die Erfindung bestimmte Einzelkomponenten für dieses Material und aus einem solchen Material herstellte Gegenstände.

Polyurethan-Schaumdichtungen, die in situ aus den Komponenten am Ort der Verwendung durch freies Aufschäumen des Polyurethan-Materials hergestellt werden, sind schon seit langem bekannt (vgl. DE 15 94 266 C3, DE-OS 18 08 821). Bei dieser Technik läuft - wie auch bei der Herstellung anderer Polyurethanschäume - die Schäumung gleichzeitig mit der Kettenverlängerungsreaktion ab; die geschäumte Struktur wird sozusagen infolge der Polymeraufbau- und -vernetzungsreaktionen fixiert. wm:hs

Als Komponenten für die Schaumherstellung kommen prinzipiell in Frage:
- als Komponente A: alle Verbindungen mit mindestens zwei Zerewitinov-aktiven H-Atomen, wobei mittels der Struktur der Komponente und ihrer Kettenlänge die Eigenschaften des fertigen Produkts stark variiert werden können;
- als Komponente B: alle mindestens zwei Isocyanatgruppen (NCO-Gruppen) enthaltenden Verbindungen, die mit Zerewitinov-aktiven H-Atomen der Komponente A reagieren können, besonders bevorzugt sind Polyisocyanate auf der Basis von 4,4'-Diphenylmethandiisocyanat (MDI).

Während die Schäumung früher generell mit physikalischen Mitteln bewirkt wurde, ist man schon seit geraumer Zeit mehr und mehr dazu übergegangen, das zur Schäumung benötigte Gas durch chemische Reaktion in situ entstehen zu lassen. So konnten die umweltbedenklichen, weil ozonzerstörenden Fluor-Chlor-Kohlenwasserstoffe durch das weit weniger schädliche Kohlendioxid ersetzt werden. Auch bei den FIPM-Systemen (Foam In Place Materials, in situ geschäumte Materialien) ist dies mittlerweile Stand der Technik. Es sind sowohl Produkte bekannt, die aufgrund ihrer niedrigen Viskositäten in Nuten geschäumt werden, als auch solche, die aufgrund ihrer thixotropen Eigenschaften auf verschieden geformten Flächen frei geschäumt werden können. Verarbeitet werden die Komponenten mittels Misch- und Dosieranlagen, die Mischung selbst erfolgt in dynamischen oder in statischen Mischkammern.

Die freie Oberfläche solchermaßen geschäumter Materialien wird von einer Integralhaut gebildet. Bei Härten von über ca. 15 Shore-A-Einheiten weisen sie zumeist Materialfestigkeiten auf, die für ihre Einsatzzwecke durchaus ausreichend sind; dies gilt in den meisten Fällen auch für die Kerbfestigkeit und Reißfestigkeit der Integralhaut. Je weicher jedoch das Material ist, desto geringer ist die mechanische Widerstandsfähigkeit der Integralhaut. Es war bisher kein nach den beschriebenen Verfahren herstellbares Material bekannt, das bei Shore-A-Härten von weniger als 5 eine ähnliche Bruchdehnung aufwies wie vergleichbare Materialien mit Shore-A-Härten im Bereich von 40. Die Weiterreißfestigkeit ist bei den bekannten FIPM-Systemen generell niedrig und unbefriedigend.

Es ist daher eine Aufgabe der Erfindung, ein aufschäumbares Zweikomponenten-Material der eingangs genannten Art anzugeben, das die Erzeugung geschäumter Produkte einer Shore-A-Härte von weniger als 30 und mit hoher Bruchdehnung und guter Weiterreißfestigkeit auch bei geringer Härte erlaubt.

Eine weitere Aufgabe der Erfindung liegt in der Bereitstellung von speziellen Einzelkomponenten, Präpolymeren und dergleichen für ein solches Zweikomponenten-Material.

Es ist ebenfalls Aufgabe der Erfindung, gattungsgemäße geschäumte Materialien mit mechanisch besonders widerstandsfähiger und reißfester Integralhaut anzugeben.

Zur Lösung dieser Aufgaben dienen die Merkmale der unabhängigen Ansprüche, während bevorzugte Ausführungsformen in den abhängigen Ansprüchen definiert werden.

Ein wesentlicher Aspekt der erfindungsgemäßen Lösung liegt darin, ein gattungsgemäßes Zweikomponenten-Material so auszubilden, daß die eine Komponente (A) eine nur zwei Hydroxylgruppen pro Molekül aufweisende polymere Polyolkomponente und die andere Komponente (B) eine ebenfalls bifunktionelle Isocyanat-Komponente ist, wobei gegebenenfalls übliche weitere Zusatzstoffe vorgesehen werden.

Ohne an eine bestimmte Theorie gebunden sein zu wollen, geht die Erfindung bei der Wahl geeigneter Komponenten für die erfindungsgemäßen aufschäumbaren Systeme davon aus, daß die mechanischen und physikalischen Eigenschaften von Polyurethanen sehr wesentlich vom Vernetzungsgrad, von der Anzahl und relativen Anordnung der Urethan-Gruppen sowie von der Häufigkeit von Verzweigungsstellen in der Kettenstruktur bestimmt werden.

Bei Polyurethan-Schäumen kommen als Parameter mit wesentlichem Einfluß auf die Eigenschaften noch die Anzahl und die relative Anordnung von Harnstoff-Gruppierungen hinzu.

Dadurch läßt sich die Elastizität mittels geeigneter Änderung der obigen Parameter in gewünschter Weise einstellen: Mit steigender Zahl von Vernetzungsstellen und polaren sowie Wasserstoffbrücken-Wechselwirkungen sinkt die Elastizität, bis im Extremfall ein starres Gerüst entsteht. Reduziert man dagegen die Anzahl der Vernetzungsstellen, so werden die Produkte elastischer. Diese erhöhte Elastizität kann erfindungsgemäß erreicht werden durch Erhöhung des Anteils an bifunktionellen Reaktionskomponenten gegenüber den multifunktionellen Reaktionskomponenten und möglichste Verringerung der Anzahl von Hydroxyl- und anderen reaktiven Gruppen; durch Verwendung längerer Polyolkettensegmente; durch Einführung von nicht-reaktiven Seitenketten bzw. durch eine Kombination verschiedener solcher und ergänzender weiterer Parameter, die sich aus der folgenden Beschreibung bevorzugter Ausführungsbeispiele sowie den Ansprüchen ergeben.

Es wurde überraschend gefunden, daß bei Anwendung dieser Erkenntnisse auf nicht-klebende frei geschäumte (d.h. nicht in einer Form hergestellte) Polyurethan-Materialien nicht nur die Elastizität des Materials verbessert wird, sondern neben der Bruchdehnung auch die Weiterreißfestigkeit und die Festigkeit der Integralhaut erheblich zunehmen. So lassen sich erfindungsgemäß beispielsweise frei geschäumte Dichtungen herstellen, die bei sehr weicher Einstellung (Shore-A-Härte geringer als 5) eine hervorragende, bekannten Produkten weit überlegene mechanische Beständigkeit aufweisen. Besonders überraschend ist die große mechanische Widerstandsfähigkeit der Integralhaut solcher frei geschäumter Produkte.

Von besonderem Vorteil sind die erfindungsgemäßen Systeme für die Herstellung von Dichtungen, die beispielsweise durch Auftrag der gemischten, aber noch nicht miteinander zur Reaktion gebrachten Komponenten A und B auf das abzudichtende Teil gebildet werden, wo die Ausbildung der Dichtung dann in situ erfolgt.

Vorteilhaft ist die Erfindung aber auch einsetzbar für die Herstellung von Dichtungen, die durch Auftrag der gemischten, aber noch nicht miteinander zur Reaktion gebrachten Komponenten A und B in eine Form gebildet werden, aus der die fertige Dichtung entnommen und verwendet werden kann.

Die Erfindung eignet sich weiterhin mit Vorteil für die Erzeugung von Beschichtungen am Ort ihrer Verwendung, insbesondere durch freies Aufschäumen einer erfindungsgemäßen Mischung aus den Komponenten A und B. Diese Beschichtungen können auf ebenen Flächen wie auch auf Unterlagen mit anderer Formgebung erzeugt werden. Die Erfindung läßt sich beispielsweise für die Oberflächenbeschichtung von zylindrischen Teilen wie Schläuchen und Rohren verwenden. Der Auftrag.des flüssigen, gemischten zweikomponentigen Materials vor der Reaktion kann beispielsweise durch Aufgießen oder Aufsprühen erfolgen. Zur Vermischung der Komponenten kann man sich sowohl dynamischer als auch geeigneter statischer Mischelemente bedienen.

Die Anwendung der erfindungsgemäßen Systeme ist natürlich nicht auf die Erzeugung von Dichtungen und Beschichtungen beschränkt, vielmehr läßt sich die Erfindung für alle Anwendungszwecke verwenden, bei denen eine große mechanische Widerstandsfähigkeit eines aufgeschäumten Materials, insbesondere eines ausgesprochen weichen Materials, von Bedeutung ist.

Die erfindungsgemäße Komponente A kann eines oder mehrere Polyole, auch im Gemisch miteinander und mit anderen Bestandteilen, umfassen.

Ein erster Grundtypus bevorzugter Polyole für die Komponente A beruht auf Polyethern und deren Abwandlungsprodukten. Insbesondere eignen sich erfindungsgemäß bei Raumtemperatur flüssige Polyether auf Basis von z. B. Ethylenoxid, Propylenoxid, Tetrahydrofuran, sowie entsprechende Copolyether. Dabei kann vorgesehen sein, daß der (Co-)Polyether aufgepfropfte Seitenketten aufweist, insbesondere solche, die von Acrylnitriloder Styrolmonomeren hergeleitet sind.

Ein anderer Grundtypus bevorzugter Polyole für die Komponente A beruht auf Polyestern und deren Abwandlungsprodukten. Hiervon werden gegenwärtig die unterhalb von etwa 20°C schmelzenden aliphatischen Polyester, wie z. B. Polyalkylenadipate und Polyalkylencarbonate, besonders bevorzugt.

Als Polyolkomponente werden weiterhin mit Hydroxylgruppen versehene Polyalkene wie z. B. bei Raumtemperatur flüssiges, OH-Gruppen-derivatisiertes Polybutadien bevorzugt.

Als Kettenverlängerer kann die Polyolkomponente vorteilhaft Diole wie etwa Butandiol, Hexandiol und dergleichen, Diamine wie z. B. Diaminohexan, Aminogruppen-terminierte Polyole (z. B. bifunktionelle Jeffamine® ) enthalten. Auch kann die Polyolkomponente A vorteilhaft (meist in kleinen relativen Anteilen) solche mehrfunktionellen Verbindungen umfassen, die mehr als zwei Zerewitinov-aktive Protonen haben, wie insbesondere z. B. Triethanolamin, Trimethylolpropan, Pentaerythrit, Texacat® DPA, trifunktionelle Jeffamine® und Amin-endverkappte Polyole wie z. B. die unter der Bezeichnung Polamine® im Handel befindlichen Produkte.

Vorteilhaft kann die Komponente A z. B. dispergierten Polyharnstoff enthalten. Die Komponente A kann darüberhinaus Gehalte, auch sehr hohe Gehalte, an üblichen weiteren Zuschlägen wie Katalysator, Pigment, Thixotropiermittel, dispergierte und gelöste anorganische und organische Verbindungen und Hydrophobierungsmittel enthalten. Zudem ist üblicherweise die Komponente A wenigstens mit dem Wassergehalt versehen, der für die Aufschäumreaktion benötigt wird.

Die Komponente B enthält vorzugsweise eine oder mehrere Isocyanatverbindungen der folgenden, beispielhaft aufgeführten Verbindungstypen:
- Präpolymere wie Desmodur® PF, Mondur® PF oder Isonate® M 342, bei denen es sich um Umsetzungsprodukte von Diphenyl-methandiisocyanat bzw. Diphenylmethandiisocyanat-oli-gomeren mit Di- und/oder Tripropylenglycol handelt;
- Umsetzungsprodukte solcher Präpolymere mit einem molaren Unterschuß von Polyolen;
- Umsetzungsprodukte von Diphenylmethandiisocyanat mit einem molaren Unterschuß von längerkettigen, im wesentlichen bifunktionellen Polyolen;
- Uretonimin-modifizierte Diphenylmethandiisocyanatderivate wie beispielsweise Suprasec® 2020 oder Desmodur® CD, bei denen die Modifizierung insbesondere in der Einführung von Seitengruppen oder Seitenketten besteht;
- Umsetzungsprodukte solcher modifizierter Isocyanate mit einem molaren Unterschuß von Polyolen.

Analog gebildete andere Isocyanat-Verbindungen lassen sich erfindungsgemäß ebenfalls einsetzen. So lassen sich beispielsweise erfindungsgemäß entsprechende Verbindungen auf der Basis anderer Diisocyanate wie Toluylendiisocyanat, Hexandiisocyanat, hydriertes Diphenylmethandiisocyanat, Isophorondiisocyanat und dergleichen einsetzen.

Die Komponente B kann neben einer oder mehreren dieser Isocyanatverbindungen ebenfalls übliche Zusätze wie Pigmente, Thixotropiermittel, Füllstoffe und dergleichen enthalten.

Es ist natürlich stattdessen auch möglich, meist aber nicht zweckmäßig, die genannten Zusätze separat von den Polyolanteilen der Komponente A und Isocyanatanteilen der Komponente B dem Zweikomponentensystem erst beim Mischen zuzusetzen.

Von den im Prinzip bekannten Zusätzen zur Parametereinstellung solcher Zweikomponentensysteme eignen sich als Thixotropiermittel insbesondere pyrogene Kieselsäure, oberflächenmodifiziertes Kalziumcarbonat und hydriertes Rizinusöl wie z. B. Luvothix® HT. Als Hydrophobierungsmittel lassen sich beispielsweise Metallseifen wie etwa Aluminiumstearate oder Zinkstearate verwenden.

In einer vorteilhaften Ausführungsform beträgt der Gehalt der Polyolverbindung(en) in der Komponente A bis zu etwa 99,5%, während der Gehalt der Isocyanatverbindung(en) in der Komponente B etwa 50% bis 100% beträgt.

Bevorzugt enthält die Komponente A maximal 95%, besonders bevorzugt 80% bis 95% der Polyolverbindung(en) und die Komponente B 60 bis 100%, besonders bevorzugt 80 bis 100% der Isocyanatverbindung(en).

Erfindungsgemäße Ausführungsformen enthalten für die Komponente A folgende Zusatzstoffe:

Ausreichend bis im Überschuß Wasser, vorzugsweise 0,1 bis 5% und besonders bevorzugt 0,5 bis 2% Wasser;

| | |
|---|---|
| 0- 5%, | bevorzugt 0-2%, bes. bevorzugt 0- 1% Katalysator |
| 0- 3%, | bevorzugt 0-2%, bes. bevorzugt 0- 1,5% Pigment |
| 0-30%, | bevorzugt 0-20%, bes. bevorzugt 0-10% Thixotropiermittel |
| 0-50%, | bevorzugt 0-40%, bes. bevorzugt 0-30% wenigstens eines dispergierten anorganischen Feststoffes, |
| 0-70%, | bevorzugt 0-50%, bes. bevorzugt 0-30% wenigstens eines gelösten anorganischen oder organischen Feststoffes |
| 0-95%, | bevorzugt 0-70%, bes. bevorzugt 0-50% wenigstens einer nichtreaktiven organischen Verbindung |
| 0-50%, | bevorzugt 0-40%, bes. bevorzugt 0-30% eines niedermolekularen Kettenverlängerers |
| 0-25%, | bevorzugt 0-10%, bes. bevorzugt 0- 5% einer mehrfunktionellen Zerewitinov-aktiven Verbindung |
| 0-20%, | bevorzugt 0-15%, bes. bevorzugt 0-10% eines Hydrophobierungsmittels; |

und für die Komponente B:

| | |
|---|---|
| 0-40%, | bevorzugt 0-30%, bes. bevorzugt 0- 1% einer nichtreaktiven organischen Verbindung |
| 0- 3%, | bevorzugt 0-2%, bes. bevorzugt 0-1,5% Pigmente |
| 0-30%, | bevorzugt 0-20%, bes. bevorzugt 0-10% Thixotropiermittel. |

Bei dem für die Komponente A angegebenen Zusatz wenigstens eines "dispergierten anorganischen Feststoffes" handelt es sich um Zuschläge wie Füllstoffe, insbesondere CaCO₃, ggf. auch als Haftvermittler dienende Feststoffe. In diese Kategorie fallen auch anorganische Flammschutzzusätze und dgl..

Bei dem nachfolgend angegebenen wenigstens einen "gelösten anorganischen oder organischen Feststoff" handelt es sich um Zuschläge wie Streckmittel und Modifikatoren für die physikalischen und chemischen Eigenschaften des Schaumes.

Bei der als Zusatz für die Komponenten A und B angegebenen wenigstens einen "nicht-reaktiven organischen Verbindung" handelt es sich z. B. um Modifikatoren der Oberflächeneigenschaften des Schaumes (also insbesondere der Integralhaut) wie z.B. Propylencarbonat, um Weichmacher, um dispergierte organische Flammschutzmittel und dgl..

Es wird bevorzugt, die Komponenten jeweils mit Gehalten an den vorgesehenen Zusatzstoffen auszustatten, so daß am Einsatzort nur noch die Vermischung des Zweikomponentensystems und die Einleitung der Aufschäumreaktion erfolgen muß. Gegenstand dieser Erfindung sind daher auch die einzelnen, mit den Zusatzstoffen versehenen Komponenten der erfindungsgemäßen Systeme.

Im folgenden wird die Erfindung anhand einiger Ausführungsbeispiele näher beschrieben, die auch die der Anmelderin gegenwärtig bekannte beste Ausführungsform der Erfindung umfassen.

Zunächst wurden drei Ausführungsbeispiele für die erfindungsgemäße Komponente A und drei Ausführungsbeispiele für die erfindungsgemäße Komponente P erzeugt. Als Vergleichsbeispiel wurde eine handelsübliche NCO-Komponente für PU-Schäume gewählt.

### Beispiel 1:

Eine erfindungsgemäße Komponente A1 wurde gebildet durch Mischen von 88,4% Polyetherdiol Arcol® 1025, 5,0% Polyethertriol Baycoll® BT 1380, 1,4% Triethanolamin, 0,3% Aminkatalysator Dabco® 33LV, 0,1% metallorganischem Katalysator Irgastab® DBTL, 1,4% Wasser, 0,4% Farbpaste Moltoprene® AUN und 3,0% modifiziertem Rizinusöl Luvothix® HT.

### Beispiel 2:

Eine erfindungsgemäße Komponente A2 wurde gebildet durch Mischen von 92,4% Polyetherdiol Arcol® 1025, 1,6% Triethanolamin, 0,3% Aminkatalysator Dabco® 33LV, 0,2% metallorganischem Katalysator Irgastab® DBTL, 1,4% Wasser, 0,5% Farbpaste Moltoprene® AUN, 3,0% oberflächen-modifiziertem Kalziumcarbonat Winnofil® SPT und 0,6% pyrogener Kieselsäure HDK N 20.

### Beispiel 3:

Eine erfindungsgemäße Komponente A3 wurde gebildet durch Mischen von 69,3% hochmolekularem Polyethertriol Baycoll® BT 5035, 8,0% Polyesterdiol Baycoll® AD 1280, 10,0% hydroxylterminiertem Polybutadien Liquiflex® H, 10,0% aliphatischem Polyester Bester® 105, 1,0% Triethanolamin, 0,3% Aminkatalysator Dabco® 33 LV, 0,2% metallorganischem Katalysator Irgastab® DBTL, 0,7% Wasser, 0,5% Farbpaste Moltoprene® AUN und 0,5% pyrogener Kieselsäure HDK® N 20.

### Beispiel 4:

Als erfindungsgemäße Komponente 1 wurde ein isocyanattermiiertes Präpolymer verwendet, das als NCO-Komponente für elastische ungeschäumte Polyurethane im Handel unter der Bezeichnung Desmodur® PF erhältlich ist.

### Beispiel 5:

Als erfindungsgemäße Komponente B2 wurde ein isocyanatterminiertes Präpolymer aus 64,8% der Komponente B1 gemäß Beispiel 4 mit 34,9% hochmolekularem Polyethertriol Baycoll® BT 5035 und 0,01% Stabilisator (Benzoylchlorid) verwendet.

### Beispiel 6:

Als erfindungsgemäße Komponente B3 wurde ein uretonimin-modifiziertes Diphenylmethandiisocyanat mit einer Funktionalität von 2,05 bis 2,2 eingesetzt, das unter der Bezeichnung Suprasec® VM 2050 im Handel erhältlich ist.

### Beispiel 7:

Zum Vergleich diente als Komponente B4 das im Handel befindliche Produkt "Härter 302" der H. B. Fuller GmbH München. Hierbei handelt es sich um eine dem Stand der Technik entsprechende Diisocyanat-Komponente für herkömmliche Polyurethanschaumdichtungen.

Die Komponenten der Beispiele 1 bis 7 wurden in einer dynamischen Mischkammer einer Zweikomponentenmisch- und Dosieranlage üblicher Bauart vermischt und ausgetragen. Dabei wurde dafür gesorgt, daß die A-Komponente in ausreichendem Umfang mit Luft "beladen" wurde, um die Nukleierung für die Schaumbildung zu erreichen.

Die folgenden Mischungsverhältnisse wurden verwendet:

| | | | | | |
|---|---|---|---|---|---|
| A1/B1 | 100 : 42 | A2/B1 | 100 : 50 | A3/B1 | 100 : 30 |
| A1/B2 | 100 : 70 | A2/B2 | 100 : 75 | A3/B2 | 100 : 50 |
| A1/B3 | 100 : 23 | A2/B3 | 100 : 24 | A3/B3 | 100 : 23 |
| A1/B4 | 100 : 18 | A2/B4 | 100 : 20 | A3/B4 | 100 : 20 |

Aus den so ausgetragenen Mischungen entstanden geschäumte Gießlinge von ca. 10 cm Durchmesser und ca. 4 cm Höhe. Nach beendeter Aufschäumung wurden diese Produkte verschiedenen Tests unterzogen.

Die Shore-A-Härte wurde nach DIN 53505 gemessen.

Die Shore-00-Härte wurde analog der Shore-A-Härtemessung mit einem Shore-00-Meßgerät bestimmt.

Ein Kantentest wurde so durchgeführt, daß die geschäumten Gießlinge über eine gerundete Metallkante so gezogen wurden, daß der Gießling in einem Winkel von 90° abgeknickt wurde. Dabei wurde der Schaum an der Kante um etwa 70% komprimiert. Der Kantentest galt als bestanden, wenn die Oberfläche des Gießlings hinterher keinen Riß aufwies. Wenn die Oberfläche besonders geringe Spuren mechanischer Beanspruchung zeigte, galt der Kantentest als "sehr gut bestanden".

Ein Stichtest wurde dadurch durchgeführt, daß ein Gießling der beschriebenen Art mittels einer abgerundeten Spitze mit einem Durchmesser von 2 mm vollständig zusammengedrückt wurde. Der Test galt als bestanden, wenn die Haut des Gießlings dabei unversehrt blieb und insbesondere nicht perforiert wurde. Auch hier wurden Produkte mit auffällig geringen Beanspruchungsspuren mit dem Prädikat "sehr gut bestanden" gekennzeichnet.

Die Dichte des Schaumes wurde nach DIN 53420 bestimmt.

Die Bruchdehnung und die Zugfestigkeit wurden in Anlehnung an DIN 53571 mittels eines Zwick-Universalprüfgeräts 1455 bei einer Meßlänge von 50 mm, einer Prüfgeschwindigkeic von 500 mm/Minute und einer Schaumdimension im Meßbereich von 13 mm Breite zu 10 mm Dicke bestimmt.

Die Bruchdehnung wurde dabei in Prozent, die Zugfestigkeit in N/mm² gemessen.

Die Ergebnisse sind in der nachstehenden Tabelle angegeben.

| | Komponenten | Shore A | Shore 00 | Kantentest | Stichtest | Dichte (g/cm³) | Bruchdehnung (%) | Zugfestigkeit (N/mm²) |
|---|---|---|---|---|---|---|---|---|
| A1 | B1 | 1 | 45 | ++ | ++ | 0.12 | 166 | 0.17 |
| | B2 | 1 | 45 | ++ | ++ | 0.16 | --1) | --1) |
| | B3 | 1 | 45 | + | + | 0.19 | 107 | 0.14 |
| | B4 | 1 | 40 | - | - | 0.20 | 65 | 0.04 |
| A2 | B1 | 1 | 35 | ++ | ++ | 0.13 | 228 | 0.27 |
| | B2 | 1 | 40 | ++ | ++ | 0.15 | --1) | --1) |
| | B3 | 1 | 40 | + | + | 0.18 | 136 | 0.18 |
| | B4 | 1 | 40 | - | - | 0.17 | 68 | 0.06 |
| A3 | B1 | 18 | --1) | ++ | | 0.28 | 153 | 0.46 |
| | B2 | 20 | --1) | ++ | ++ | 0.28 | --1) | --1) |
| | B3 | 18 | --1) | + | + | 0.32 | 129 | 0.53 |
| | B4 | 19 | --1) | - | - | 0.36 | 73 | 0.44 |
| ++ sehr gut bestanden + bestanden - nicht bestanden 1) nicht bestimmt. | | | | | | | | |

Wie die Ergebnisse zeigen, ergeben alle Kombinationen mit den Komponenten B1, B2 und B3 deutlich bessere Eigenschaften der Integralhaut im Kantentest und im Stichtest. Besonders bei den weichen Produkten ergibt sich eine merkliche Verbesserung hinsichtlich der Bruchdehnung und der Zugfestigkeit, im Vergleich mit den unter Verwendung der handelsüblichen Komponente B4 erzeugten Produkten.

## Patentansprüche

1. Aufschäumbares Zwei-Komponenten-Material für die Herstellung von nicht-klebenden, frei geschäumten Gegenständen auf Polyurethanbasis, das eine wäßrige, nur zwei Hydroxylgruppen aufweisende, polymere Polyol-Komponente A und eine bifunktionelle NCO-haltige Komponente B sowie gegebenenfalls weitere Zusatzstoffe enthält, wobei die Bestandteile des Materials so gewählt sind, daß die Shore-A-Härte des geschäumten Gegenstandes < 30 ist.

2. Material nach Anspruch 1, bei dem das Polyol der Komponente A ein bei Raumtemperatur flüssiger Polyether oder Copolyether ist, insbesondere auf der Basis eines oder mehrerer Monomeren wie Ethylenoxid, Propylenoxid oder Tetrahydrofuran.

3. Material nach Anspruch 2, bei dem das Polyetherdiol aufgepfropfte Seitenketten, insbesondere aus Acrylnitril-Wiederholungseinheiten oder Styrol-Wiederholungseinheiten trägt.

4. Material nach Anspruch 1, bei dem das Polyol ein aliphatischer Polyester bei einem Schmelzpunkt von weniger als etwa 20°C, insbesondere ein Polyalkylenadipat oder Polyalkylencarbonat ist.

5. Material nach Anspruch 1, bei dem das Polyol ein bei Raumtemperatur flüssiges mit OH-Gruppen versehenes Polyalken oder Polyalkadien, insbesondere Polybutadien ist.

6. Material nach einem der Ansprüche 1 bis 5, bei dem der Polyolgehalt der Komponente A von einer Mischung von Polyolen gemäß wenigstens einem der Ansprüche 2 bis 5 gebildet wird, gegebenenfalls unter Zusatz eines Polyols mit dispergiertem Polyharnstoff.

7. Material nach einem der Ansprüche 1 bis 6, bei dem der Isocyanat-Anteil der Komponente B im wesentlichen aus bifunktionellen Verbindungen besteht.

8. Material nach einem der Ansprüche 1 bis 7, bei dem das Isocyanat ein bifunktionelles Isocyanat-terminiertes Präpolymer umfaßt.

9. Material nach Anspruch 8, bei dem das Präpolymer ein Umsetzungsprodukt von Diphenylmethandiisocyanat bzw. Diphenylmethandiisocyanat-Oligomeren und Di- und/oder Tripropylenglycol ist.

10. Material nach Anspruch 9, bei dem das Präpolymer aus einem Umsetzungsprodukt gemäß Anspruch 9 oder aus Diphenyl-methandiisocyanat bzw. Diphenylmethandiisocyanat-Oligomeren und wenigstens einem Polyol in molarem Unterschuß des Polyolanteils gebildet ist.

11. Material nach Anspruch 7, welches als Isocyanatanteil der Komponente B ein Uretonimin-modifiziertes Diphenylmethandiisocyanat enthält.

12. Material nach Anspruch 7, welches als Isocyanatanteil der Komponente B ein Umsetzungsprodukt eines Uretonimin-modifiziertes Diphenylmethandiisocyanats gemäß Anspruch 11 mit wenigstens einem Polyol im molaren Unterschuß des Polyolanteils enthält.

13. Material nach einem der Ansprüche 1 bis 12, bei dem als Polyol-Kettenverlängerer für die Komponente A wenigstens ein Diol, wie insbesondere Butandiol oder Hexandiol eingesetzt wird.

14. Material nach einem der Ansprüche 1 bis 13, bei dem als Polyol-Kettenverlängerer für die Komponente A wenigstens ein Diamin und/oder wenigstens ein Polyol mit Aminoendgruppen eingesetzt wird.

15. Material nach einem der Ansprüche 1 bis 14, welches polyfunktionelle Hydroxyl- und/oder Aminoverbindungen, wie insbesondere Triethanolamin, Trimethylolpropan, Pentaerythrit oder aminendverkappte Polyole enthält.

16. Material nach einem der Ansprüche 1 bis 15 mit einem Gehalt an einem Thixotropiermittel, wie pyrogene Kieselsäure, oberflächenmodifiziertes Kalziumcarbonat und/oder hydriertes Rizinusöl.

17. Material nach einem der Ansprüche 1 bis 16, welches ein Hydrophobierungsmittel, vorzugsweise eine Metallseife, wie Aluminiumstearat oder Zinkstearat enthält.

18. Zwei-Komponenten-Material nach einem der Ansprüche 1 bis 17, bei dem die eine Komponente A maximal 99,5 % Polyol und die andere Komponente B 50 bis 100 % eines NCO-terminierten Präpolymers enthält.

19. Zwei-Komponenten-Material nach Anspruch 18, bei dem die eine Komponente A als Zusatzstoffe für die Schäumungsreaktion ausreichend bis im Überschuß Wasser, 0 - 5% Katalysator, 0 - 3% Pigment, 0 - 30% Thixotropiermittel, 0 - 50% eines dispergierten anorganischen Feststoffes, wie z. B. eines Füllstoffes und/oder Haftungsvermittlers, insbesondere CaCO₃ und/oder eines Flammschutzmittels, 0 - 70% eines gelösten anorganischen oder organischen Feststoffes, wie z. B. eines Streckmittels und/oder eines üblichen Zusatzes zur Modifikation der physikalischen bzw. chemischen Eigenschaften des Schaumes, 0 - 95% einer nichtreaktiven organischen Verbindung, wie z. B. eines Mittels zur Einstellung der Oberflächeneigenschaften des Schaumes, eines Weichmachers oder eines Flammschutzmittels, 0 - 50% eines Kettenverlängerers, 0 - 25% einer mehrfunktionellen Zerewitinov-aktiven Verbindung und 0 - 20% eines Hydrophobierungsmittels, und die andere Komponente B als Zusatzstoffe 0 - 40% einer nichtreaktiven organischen Verbindung, wie z. B. eines Mittels zur Einstellung der Oberflächeneigenschaften des Schaumes, eines Weichmachers oder eines Flammschutzmittels, 0 - 3% Pigmente und 0 - 30% Thixotropiermittel enthält.

20. Zwei-Komponenten-Material nach Anspruch 19, bei dem die Komponente A weiterhin 0 - 50% eines dispergierten anorganischen Feststoffes, wie z. B. eines Füllstoffes und/oder Haftungsvermittlers, insbesondere CaCO₃ und/oder eines Flammschutzmittels, 0 - 70% eines gelösten anorganischen oder organischen Feststoffes, wie z. B. eines Streckmittels und/oder eines üblichen Zusatzes zur Modifikation der physikalischen bzw. chemischen Eigenschaften des Schaumes, 0 - 95% einer nichtreaktiven organischen Verbindung, wie z. B. eines Mittels zur Einstellung der Oberflächeneigenschaften des Schaumes, eines Weichmachers oder eines Flammschutzmittels, 0 - 50% eines Kettenverlängerers, 0 - 25% einer mehrfunktionellen Zerewitinov-aktiven Verbindung und 0 - 20% eines Hydrophobierungsmittels enthält.

21. Zwei-Komponenten-Material nach Anspruch 18 oder 19, bei dem die Komponente A als Zusatzstoffe 0,1 - 5% Wasser, 0 - 2% Katalysator, 0 - 2% Pigment, 0 - 20% Thixotropiermittel, und die andere Komponente B als Zusatzstoffe 0 - 30% einer nichtreaktiven organischen Verbindung, wie z. B. eines Mittels zur Einstellung der Oberflächeneigenschaften des Schaumes, eines Weichmachers oder eines Flammschutzmittels, 0 - 2% Pigmente und 0 - 20% Thixotropiermittel enthält.

22. Zwei-Komponenten-Material nach Anspruch 21, bei dem die Komponente A weiterhin 0 - 40% eines dispergierten anorganischen Feststoffes, wie z. B. eines Füllstoffes und/oder Haftungsvermittlers, insbesondere CaCO₃ oder eines Flammschutzmittels, 0 - 50% eines gelösten anorganischen oder organischen Feststoffes, wie z. B. eines Streckmittels und/oder eines üblichen Zusatzes zur Modifikation der physikalischen bzw. chemischen Eigenschaften des Schaumes, 0 - 70% einer nicht-reaktiven organischen Verbindung, wie z. B. eines Mittels zur Einstellung der Oberflächeneigenschaften des Schaumes, eines Weichmachers oder eines Flammschutzmittels, 0 - 40% eines niedermolekularen Kettenverlängerers, 0 - 10% einer mehrfunktionellen Zerewitinov-aktiven Verbindung und 0 - 15% eines Hydrophobierungsmittels enthält.

23. Zwei-Komponenten-Material nach Anspruch 18 oder 19, bei dem die eine Komponente A als Zusatzstoffe 0,5 - 2% Wasser, 0 - 1% Katalysator, 0 - 1,5% Pigment, 0 - 10% Thixotropiermittel, 0 - 30% eines dispergierten anorganischen Feststoffes, wie z. B. eines Füllstoffes und/oder Haftungsvermittlers, insbesondere CaCO₃ oder eines Flammschutzmittels, 0 - 30% eines gelösten anorganischen oder organischen Feststoffes, wie z. B. eines Streckmittels und/oder eines üblichen Zusatzes zur Modifikation der physikalischen bzw. chemischen Eigenschaften des Schaumes, 0 - 50% einer nichtreaktiven organischen Verbindung, wie z. B. eines Mittels zur Einstellung der Oberflächeneigenschaften des Schaumes, eines Weichmachers oder eines Flammschutzmittels, 0 - 30% eines Kettenverlängerers und 0 - 5% einer mehrfunktionellen Zerewitinov-aktiven Verbindung und 0 - 10% eines Hydrophobierungsmittels, und die andere Komponente B als Zusatzstoffe 0 - 1% einer nichtreaktiven organischen Verbindung, wie z. B. eines Mittels zur Einstellung der Oberflächeneigenschaften des Schaumes, eines Weichmachers oder eines Flammschutzmittels, 0 - 1,5% Pigmente und 0 - 10% Thixotropiermittel enthält.

24. Zwei-Komponenten-Material nach einem der Ansprüche 18 bis 23, bei dem als Mittel zur Einstellung der Oberflächeneigenschaften des Schaums Propylencarbonat eingesetzt wird.

25. Zwei-Komponenten-Material nach einem der Ansprüche 18 bis 24, bei dem als Kettenverlängerer Diaminohexan eingesetzt wird.

26. Verwendung einer Komponente für ein aufschäumbares Zwei-Komponenten-Material, die überwiegend aus einer nur zwei Hydroxyl-Gruppen aufweisenden polymeren Polyolverbindung, wenigstens einer zur Aufschäumung beim Vermischen der Komponente mit einer NCO-Komponente ausreichenden Menge Wasser, sowie gegebenenfalls weiteren Bestandteilen und üblichen Zusätzen besteht, zur Herstellung von geschäumten Gegenständen auf Polyurethanbasis mit einer Shore-A-Härte < 30, aus einem Material gemäß einem der Ansprüche 1 bis 17.

27. Verwendung nach Anspruch 26, bei der der Polyolanteil wenigstens einen bei Raumtemperatur flüssigen Polyether, Co-Polyether, aliphatischen Polyester oder wenigstens ein mit Hydroxyl-Gruppen versehenes Polyalken oder Polyalkadien umfaßt.

28. Verwendung nach Anspruch 27, wobei die Polyolkomponente wenigstens einen Polyether oder Co-Polyether auf der Basis von Ethylenoxid, Propylenoxid oder Tetrahydrofuran umfaßt, der gegebenenfalls wenigstens eine insbesondere von Acrylnitril oder Styrol abgeleitete aufgepfropfte Seitenkette hat.

29. Verwendung nach Anspruch 27, wobei die Komponente A ein Polyalkylenadipat und/oder ein Polyalkylencarbonat umfaßt.

30. Verwendung nach Anspruch 27, wobei die Polyolkomponente ein bei Raumtemperatur flüssiges hydroxylgruppenhaltiges Polybutadien umfaßt.

31. Verwendung einer Komponente nach einem der Ansprüche 26 bis 30, wobei die Komponente weiterhin umfaßt:
Ausreichend bis im Überschuß Wasser;
0 - 5% Katalysator;
0 - 3% Pigment;
0 - 30% Thixotropiermittel;
0 - 50% eines dispergierten anorganischen Feststoffes, wie z. B. eines Füllstoffes und/oder Haftungsvermittlers, insbes. CaCO₃, und/oder eines Flammschutzmittels;
0 - 70% eines gelösten anorganischen oder organischen Feststoffes, wie z. B. eines Streckmittels und/oder eines üblichen Zusatzes zur Modifikation der physikalischen bzw. chemischen Eigenschaften des Schaumes;
0 - 95% einer nichtreaktiven organischen Verbindung, wie z. B. eines Mittels zur Einstellung der Oberflächeneigenschaften des Schaumes, insbesondere Propylencarbonat, eines Weichmachers oder eines Flammschutzmittels;
0 - 50% eines Kettenverlängerers, wie z.B. Diaminohexan;
0 - 25% einer mehrfunktionellen Zerewitinov-aktiven Verbindung; sowie
0 - 20% eines Hydrophobierungsmittels.

32. Verwendung einer Isocyanat-Komponente für ein aufschäumbares Zwei-Komponenten-Material, welches als Hauptbestandteil wenigstens eine bifunktionelle Isocyanatverbindung umfaßt, zur Herstellung von geschäumten Gegenständen auf, Polyurethanbasis mit einer Shore-A-Häre < 30, aus einem Zwei-Komponenten-Material gemäß einem der Ansprüche 1 bis 21.

33. Verwendung nach Anspruch 32, bei welcher der Isocyanatverbindungsanteil im wesentlichen von einem bifunktionellen Isocyanat-terminierten Präpolymer, insbesondere wenigstens einem Umsetzungsprodukt von Diphenylmethandiisocyanat bzw. Diphenylmethandiisocyanat-Oligomeren mit Di- und/oder Tripropylenglycol und/oder wenigstens einem Umsetzungsprodukt auf der Basis Diphenylmethandiisocyanat, bzw. dessen vorstehend genanntem Präpolymer, mit wenigstens einem Polyol gebildet wird.

34. Verwendung nach Anspruch 28, wobei der Isocyanat-anteil ein Uretonimin-modifiziertes Diphenylmethandiisocyanat und/oder dessen Umsetzungsprodukt mit wenigstens einem Polyol umfaßt.

35. Polyurethanschaumdichtung mit einer Shore-A-Härte < 30, hergestellt durch freies, Aufschäumen eines Zwei-Komponenten-Materials gemäß einem der Ansprüche 1 bis 25.

36. Polyurethanschaumbeschichtung mit einer Shore-A-Härte < 30, hergestellt durch freies Aufschäumen eines Zwei-Komponenten-Materials nach einem der Ansprüche 1 bis 25.

37. Verfahren zur Erzeugung eines Polyurethanschaumgegenstandes mit einer Shore-A-Härte < 30, insbesondere einer Dichtung, einer Beschichtung oder dergleichen, bei dem eine noch nicht zur Reaktion gebrachte Mischung der Komponenten A und B gemäß einem der Ansprüche 1 bis 25 auf eine mit der Dichtung, Beschichtung oder dergleichen zu versehende Unterlage aufgebracht, aufgesprüht, aufgespritzt oder dergleichen wird und einer freien Aufschäumung überlassen wird.

38. Verfahren nach Anspruch 37, bei dem das noch nicht reagierende Gemisch flächig, insbesondere auf eine ebene oder gekrümmte Oberfläche, aufgetragen wird.

39. Verfahren zur Herstellung eines Polyurethanschaumgegenstandes mit einer Shore-A-Härte < 30, bei dem ein noch nicht reagierendes Gemisch der Komponenten A und B gemäß einem der Ansprüche 1 bis 25 in eine, gegebenenfalls offene, Form eingebracht und zur Reaktion gebracht und nachfolgend der aufgeschäumte Gegenstand aus der Form entnommen wird.

## Claims

1. A foamable two-component material for the production of non-adhesive, freely foamed objects based on polyurethane, containing an aqueous polymeric polyol component A having only two hydroxyl groups, and a bi-functional, NCO-containing component B, as well as, optionally, other additives, the components of the material being selected such that the Shore A hardness of the foamed object is < 30.

2. The material of claim 1, wherein the polyol of component A is a polyether or copolyether liquid at room temperature, especially based on one or more monomers such as ethylene oxide, propylene oxide, or tetrahydrofuran.

3. The material of claim 2, wherein the polyetherdiol has grafted side chains, especially of acrylonitrile repeating units or styrene repeating units.

4. The material of claim 1, wherein the polyol is an aliphatic polyester with a melting point less than about 20° C, especially a polyalkylene adipate or polyalkylene carbonate.

5. The material of claim 1, wherein the polyol is a polyalkene or polyalkadiene, especially polybutadiene provided with OH groups, which is a liquid at room temperature.

6. The material of any one of claims 1 to 5, wherein the polyol content of component A is formed by a mixture of polyols in accordance with at least one of the claims 2 to 5, optionally with an added polyol comprising dispersed polyurea.

7. The material of any one of claims 1 to 6, wherein the isocyanate portion of component B consists essentially of bi-functional compounds.

8. The material of any one of claims 1 to 7, wherein the isocyanate comprises a bi-functional isocyanate-terminated prepolymer.

9. The material of claim 8, wherein the prepolymer is a reaction product of diphenylmethane diisocyanate or diphenylmethane diisocyanate oligomers with di- and/or tripropylene glycol.

10. The material of claim 9, wherein the prepolymer is formed by a reaction product in accordance with claim 9 or by diphenylmethane diisocyanate or diphenylmethane diisocyanate oligomers and at least one polyol, with a molar deficit of the polyol portion.

11. The material of claim 7, containing as isocyanate portion of component B a uretonimine-modified diphenylmethane diisocyanate.

12. The material of claim 7, containing as the isocyanate portion of component B, a reaction product of a uretonimine-modified diphenylmethane diisocyanate according to claim 11 with at least one polyol, with a molar deficit of the polyol portion.

13. The material of any one of claims 1 to 12, wherein at least one diol, such as especially butanediol or hexanediol, is used as the polyol chain extender for component A.

14. The material of any one of claims 1 to 13, wherein at least one diamine and/or at least one polyol having amino end groups is used as the polyol chain extender for component A.

15. The material of any one of claims 1 to 14, containing polyfunctional hydroxyl and/or amino compounds, such as especially triethanolamine, trimethanolpropane, pentaerythrite, or amino-capped polyols.

16. The material of any one of claims 1 to 15, containing a thixotroping agent such as pyrogenic silicic acid, surface modified calcium carbonate, and/or hydrated castor oil.

17. The material of any one of claims 1 to 16, containing a hydrophobing agent, preferably a metal soap, such as aluminum stearate or zinc stearate.

18. The two-component material of any one of claims 1 to 17, wherein the one component A contains 99.5% polyol at most, and the other component B contains 50 to 100% of a NCO-terminated prepolymer.

19. The two-component material of claim 18, wherein the one component A contains, as additives for the foaming reaction, water ranging from an amount sufficient to excess, 0 to 5% catalyst, 0 to 3% pigment, 0 to 30% thixotroping agent, 0 to 50% of a dispersed inorganic solid such as e.g. a filler and/or an adhesion imparting agent, especially CaCO₃, and/or a fire-proofing agent, 0 to 70% of a dissolved inorganic or organic solid such as e.g. a diluting agent and/or a customary additive for modifying the physical or chemical properties of the foam, 0 to 95 % of a non-reactive organic compound such as e.g. an agent for adjusting the surface properties of the foam, a softening agent, or a fire-proofing agent, 0 to 50% of a chain extender, 0 to 25 % of a multi-functional Zerewitinov-active compound and 0 to 20% of a hydrophobing agent, and the other component B contains as additives 0 to 40% of a non-reactive organic compound such as e.g. an agent for adjusting the surface properties of the foam, a softening agent, or a fire-proofing agent, 0 to 3 % pigments and 0 to 30% thixotroping agent.

20. The two-component material of claim 19, wherein component A further contains 0 to 50% of a dispersed inorganic solid such as e.g. a filler and/or an adhesion imparting agent, especially CaCO₃, and/or a fire-proofing agent, 0 to 70% of a dissolved inorganic or organic solid such as e.g. a diluting agent and/or a customary additive for modifying the physical or chemical properties of the foam, 0 to 95 % of a non-reactive organic compound such as e.g. an agent for adjusting the surface properties of the foam, a softening agent, or a fire-proofing agent, 0 to 50% of a chain extender, 0 to 25% of a multi-functional Zerewitinov-active compound and 0 to 20 % of a hydrophobing agent.

21. The two-component material of claims 18 or 19, wherein component A contains, as additives, 0.1 to 5 % water, 0 to 2 % catalyst, 0 to 2 % pigment, 0 to 20 % thixotroping agent, and the other component B contains as additives 0 to 30% of a non-reactive organic compound such as e.g. an agent for adjusting the surface properties of the foam, a softening agent, or a fire-proofing agent, 0 to 2 % pigments and 0 to 20% thixotroping agent.

22. The two-component material of claim 21, wherein component A further contains 0 to 40% of a dispersed inorganic solid such as e.g. a filler and/or an adhesion imparting agent, especially CaCO₃, or a fire-proofing agent, 0 to 50% of a dissolved inorganic or organic solid such as e.g. a diluting agent and/or a customary additive for modifying the physical or chemical properties of the foam, 0 to 70 % of a non-reactive organic compound such as e.g. an agent for adjusting the surface properties of the foam, a softening agent, or a fire-proofing agent, 0 to 40% of a low molecular chain extender, 0 to 10% of a multi-functional Zerewitinov-active compound and 0 to 15 % of a hydrophobing agent.

23. The two-component material of claims 18 or 19, wherein component A contains, as additives, 0.5 to 2% water, 0 to 1% catalyst, 0 to 1.5% pigment, 0 to 10% thixotroping agent, 0 to 30% of a dispersed inorganic solid such as e.g. a filler and/or an adhesion imparting agent, especially CaCO₃, or a fire-proofing agent, 0 to 30 % of a dissolved inorganic or organic solid such as e.g. a diluting agent and/or a customary additive for modifying the physical or chemical properties of the foam, 0 to 50% of a non-reactive organic compound such as e.g. an agent for adjusting the surface properties of the foam, a softening agent, or a fire-proofing agent, 0 to 30% of a chain extender, 0 to 5% of a multi-functional Zerewitinov-active compound and 0 to 10% of a hydrophobing agent, and the other component B contains as additives 0 to 1% of a non-reactive organic compound such as e.g. an agent for adjusting the surface properties of the foam, a softening agent, or a fire-proofing agent, 0 to 1.5% pigments and 0 to 10% thixotroping agent.

24. The two-component material of any one of claims 18 to 23, wherein propylenecarbonate is applied as the agent for adjusting the surface properties of the foam.

25. The two-component material of any one of claims 18 to 24, wherein diaminohexane is applied as a chain extender.

26. Use of a component for a foamable two-component material, substantially consisting of a polymer polyol compound having only two hydroxyl groups, an amount of water that is at least sufficient for foaming when the component is mixed with an NCO component, and, optionally, other ingredients and customary additives, for the production of foamed objects based on polyurethane with a shore A hardness of < 30, and consisting of a material according to any one of claims 1 to 17.

27. Use of claim 26, wherein the polyol portion comprises at least one polyether, copolyether, aliphatic polyester or at least one polyalkene or poly-alkadiene having hydroxyl groups, which is liquid at room temperature.

28. Use of claim 27, wherein the polyol component has at least one polyether or copolyether based on ethylene oxide, propylene oxide, or tetrahydrofuran, which, optionally, has at least one grafted side chain, especially derived from acrylonitrile or styrene.

29. Use of claim 27, wherein the component A comprises a polyalkylene adipate and/or a polyalkylene carbonate.

30. Use of claim 27, wherein the polyol component comprises a hydroxyl group containing polybutadiene that is liquid at room temperature.

31. Use of a component according to any one of claims 26 to 30, wherein the component further comprises:
Sufficient to excess of water;
0- 5% catalyst;
0- 3% pigment;
0-30% thixotroping agent;
0-50% dispersed inorganic solid, such as e.g. a filler and/or adhesion-imparting agent, especially CaCO₃, and/or a fire-proofing agent;
0-70% dissolved inorganic or organic solid, such as e.g. a diluting agent and/or a customary additive for modifying the physical or chemical properties of the foam;
0-95% non-reactive organic compound, such as e.g. an agent to adjust the surface properties of the foam, especially proplyene carbonate, a softening agent, or a fire-proofing agent;
0-50% of a chain extender, such as, e.g. diaminohexane;
0-25 % of a multi-functional Zerewitinov active compound; as well as
0-20% of a hydrophobing agent.

32. Use of a isocyanate component for a foamable two-component material, which comprises, as its main ingredient, at least one bi-functional isocyanate compound for the production of foamed objects based on polyurethane with a shore A hardness of < 30, and consisting of a two-component material according to any one of claims 1 to 21.

33. Use of claim 32, wherein the isocyanate compound ingredient essentially is formed by an bi-functional isocyanate-terminated prepolymer, especially at least one reaction product of diphenylmethane diisocyanate or diphenylmethane diisocyanate oligomers with di- and /or tripropylene glycol and/or at least a reaction product based on diphenylmethane diisocyanate or its above-mentioned prepolymers, with at least one polyol.

34. Use of claim 28, wherein the isocyanate portion comprises an uretonimine modified diphenylmethan diisocyanate and/or its reaction product with at least one polyol.

35. A polyurethane foam seal with a shore A hardness of < 30, produced by free foaming a two-component material in accordance with any one of claims 1 to 25.

36. A polyurethane foam coating with a shore A hardness of < 30, produced by free foaming a two-component material in accordance with any one of claims 1 to 25.

37. A method for the production of a polyurethane foam object with a shore A hardness of < 30, especially a seal, a coating, or the like, wherein a not yet reacted mixture of the components A and B, in accordance with any one of claims 1 to 25, is applied to, sprayed, splashed or the like on a substrate to which has to be added e.g. a seal or a coating, or the like, and is allowed to foam freely.

38. The method of claim 37, wherein the unreacted mixture is coated, especially on to a flat or curved surface.

39. A method for the production of a polyurethane foam object with a shore A hardness of < 30, wherein the not yet reacted mixture of the components A and B, in accordance with any one of claims 1 to 25, is introduced into a mold, which, optionally, may be open, and is reacted, and subsequently the foamed object is removed from the mold.

## Revendications

1. Matériau à deux composants moussables pour la fabrication d'objets non collants, librement moussés à base de polyuréthane, contenant un composant A polymère de polyol aqueux ne présentant que deux groupes hydroxyles et un composant B à deux fonctions contenant du NCO ainsi que, le cas échéant, d'autres additifs, dans lequel les composants du matériau sont choisis de manière à ce que la dureté Shore A de l'objet moussé soit < 30.

2. Matériau selon la revendication 1, dans lequel le polyol du composant A est un copolyéther ou un polyéther liquide à température ambiante, notamment à base d'un ou plusieurs monomères comme l'oxyde d'éthylène, l'oxyde de propylène ou le tétrahydrofurane.

3. Matériau selon la revendication 2, dans lequel le polyétherdiol comporte des chaînes latérales greffées notamment à motifs unitaires répétitifs d'acrylnitrile ou de styrol.

4. Matériau selon la revendication 1, dans lequel le polyol est un polyester aliphatique dont le point de fusion est inférieur à 20 ° C environ, notamment un adipate de polyalkylène ou un carbonate de polyalkylène.

5. Matériau selon la revendication 1, dans lequel le polyol est un polyalcène ou un polyalkadiène, notamment un polybutadiène, liquide à température ambiante, doté de groupes OH.

6. Matériau selon l'une quelconque des revendications 1 à 5 dans lequel la teneur en polyol du composant A est constituée d'un mélange de polyols selon au moins l'une quelconque des revendications 2 à 5, le cas échéant par addition d'un polyol doté de polycarbamide dispersé.

7. Matériau selon l'une quelconque des revendications 1 à 6 dans lequel l'ingrédient isocyanate du composant B est constitué essentiellement de composés à deux fonctions.

8. Matériau selon l'une quelconque des revendications 1 à 7 dans lequel l'ioscyanate comprend un prépolymère à terminaisons isocyanates à deux fonctions.

9. Matériau selon la revendication 8 dans lequel le prépolymère est un produit de transformation du diisocyanate de diphénylméthane respectivement d'oligomères de diisocyanate de diphénylméthane et du di- et/ou tripropylèneglycol.

10. Matériau selon la revendication 9 dans lequel le prépolymère est formé à partir d'un produit de transformation selon la revendication 9 soit du diisocyanate de diphénylméthane respectivement d'oligomères de diisocyanate de diphénylméthane et d'au moins un polyol en déficit molaire par rapport à l'ingrédient polyol.

11. Matériau selon la revendication 7 contenant un diisocyanate de diphénylméthane modifié urétonimine à titre d'ingrédient isocyanate du composant B.

12. Matériau selon la revendication 7 contenant à titre d'ingrédient isocyanate du composant B un produit de transformation d'un diisocyanate de diphénylméthane modifié urétonimine selon la revendication 11 avec au moins un polyol en déficit molaire par rapport à l'ingrédient polyol.

13. Matériau selon l'une quelconque des revendications 1 à 12 dans lequel au moins un diol, comme notamment le butandiol ou l'hexandiol est utilisé comme allongeur de chaîne polyol pour le composant A.

14. Matériau selon l'une quelconque des revendications 1 à 13 dans lequel au moins une diamine et/ou au moins un polyol avec des groupes terminaux amino sont utilisés comme allongeur de chaîne polyol pour le composant A.

15. Matériau selon l'une quelconque des revendications 1 à 14 contenant des composés hydroxyles et/ou amino à fonctions poly comme notamment la triéthanolamine, le triméthylolpropane, le pentaérythrite ou des polyols à terminaison masquée amino.

16. Matériau selon l'une quelconque des revendications 1 à 15 avec une teneur en agent thixotrope, comme l'acide salicilique pyrogèné, le carbonate de calcium modifié en surface et/ou l'huile de ricin hydratée.

17. Matériau selon l'une quelconque des revendications 1 à 16 contenant un agent imperméabilisant, de préférence un savon métallique comme le stéarate d'aluminium ou le stéarate de zinc.

18. Matériau à deux composants selon l'une quelconque des revendications 1 à 17, dans lequel le composant A contient au maximum 99,5 % de polyol et le composant B de 50 à 100 % d'un prépolymère à terminaison NCO.

19. Matériau à deux composants selon la revendication 18, dans lequel le composant A contient à titre d'additifs pour la réaction de moussage suffisamment, jusqu'à excédent, d'eau, 0 - 5 % d'un catalyseur, 0 - 3 % de pigment, 0 - 30 % d'agent thixotrope, 0 - 50 % d'une matière solide inorganique dispersée, comme par ex. une charge et/ou un agent d'adhésion, notamment CaCO₃ et/ou un ignifugeant, 0 - 70 % d'une matière inorganique ou organique dissoute, comme par ex. un extendeur et/ou un additif courant pour modifier les propriétés physico-chimiques de la mousse, 0 - 95 % d'un composé organique non réactif, comme par ex. un agent pour mettre au point les propriétés de surface de la mousse, un plastifiant ou un ignifugeant, 0 - 50 % d'un allongeur de chaîne, 0-25 % d'un composé actif Zerewitinov à plusieurs fonctions et 0 - 20 % d'un agent imperméabilisant et le composant B contient à titre d'additifs 0 - 40 % d'un composé organique non réactif, comme par ex. un agent de mise au point des propriétés de surface de la mousse, un plastifiant ou un ignifugeant, 0 - 3 % de pigments et 0 - 30 % d'agent thixotrope.

20. Matériau à deux composants selon la revendication 19, dans lequel le composant A contient également 0 - 50 % d'une matière solide dispersée inorganique, comme par ex. une charge et/ou un agent d'adhésion, notamment CaCO₃ et/ou un ignifugeant, 0 - 70 % d'une matière solide dissoute inorganique ou organique, comme par ex. d'un extendeur et/ou d'un additif courant pour modifier les propriétés physico-chimiques de la mousse, 0 - 95 % d'un composé non réactif organique, comme par ex. d'un agent de mise au point des propriétés de surface de la mousse, d'un plastifiant ou d'un ignifugeant, 0 - 50 % d'un allongeur de chaîne, 0 - 25 % d'un composé Zerewitinow actif à plusieurs fonctions et 0 - 20 % d'un agent imperméabilisant.

21. Matériau à deux composants selon la revendication 18 ou 19, dans lequel le composant A contient à titre d'additifs 0,1 - 5 % d'eau, 0 - 2 % de catalyseur, 0 - 2% de pigment, 0 - 20 % d'agent thixotrope, et l'autre composant B contient à titre d'additif 0 - 30 % d'un composé non réactif organique, comme par ex. un agent pour mettre au point les propriétés de surface de la mousse, d'un plastifiant ou d'un ignifugeant, 0 - 2 % de pigments et 0 - 20 % d'agent thixotrope.

22. Matériau à deux composants selon la revendication 21, dans lequel le composant A contient également 0 - 40 % d'une matière solide dispersée inorganique, comme par ex. une charge et/ou un agent d'adhésion, notamment CaCO₃ ou un ignifugeant, 0 - 50 % d'une matière solide dissoute inorganique ou organique, comme par ex. d'un extendeur et/ou d'un additif courant pour modifier les propriétés physico-chimiques de la mousse, 0 - 70 % d'un composé non réactif organique, comme par ex. d'un agent de mise au point des propriétés de surface de la mousse, d'un plastifiant ou d'un ignifugeant, 0 - 40 % d'un allongeur de chaîne de faible masse moléculaire, 0 - 10 % d'un composé Zerewitinow actif à plusieurs fonctions et 0 - 15 % d'un agent imperméabilisant.

23. Matériau à deux composants selon la revendication 18 ou 19, dans lequel le composant A contient à titre d'additifs 0,5 - 2 % d'eau, 0 - 1 % de catalyseur, 0 - 1,5 % de pigment, 0 - 10 % d'agent thixotrope, 0 - 30 % d'une matière solide dispersée inorganique, comme par ex. une charge et/ou un agent d'adhésion, notamment CaCO₃ ou un ignifugeant, 0 - 30 % d'une matière solide dissoute inorganique ou organique, comme par ex. d'un extendeur et/ou d'un additif courant pour modifier les propriétés physico-chimiques de la mousse, 0 - 50 % d'un composé non réactif organique, comme par ex. d'un agent de mise au point des propriétés de surface de la mousse, d'un plastifiant ou d'un ignifugeant, 0 - 30 % d'un allongeur de chaîne, 0-5 % d'un composé Zerewitinow actif à plusieurs fonctions et 0 - 10 % d'un agent imperméabilisant et l'autre composant B contient à titre d'additif 0 - 1 % d'un composé non réactif organique, comme par ex. un agent pour mettre au point les propriétés de surface de la mousse, d'un plastifiant ou d'un ignifugeant, 0 - 1,5 % de pigments et 0 - 10 % d'agent thixotrope.

24. Matériau à deux composants selon l'une quelconque des revendications 18 à 23, dans lequel le carbonate de propylène est utilisé comme agent de mise au point des propriétés de surface de la mousse.

25. Matériau à deux composants selon l'une quelconque des revendications 18 à 24, dans lequel le diaminohexane est utilisé comme allongeur de chaîne.

26. Utilisation d'un composant pour un matériau à deux composants moussable, constitué principalement d'un composé polyol polymère présentant seulement deux groupes hydroxyles, au moins d'une quantité d'eau suffisante pour le moussage en mélangeant le composant avec un composant NCO, et le cas échéant d'autres constituants et additifs courants, pour produire l'objet moussé à base de polyuréthane d'une dureté Shore A < 30 à partir d'un matériau selon l'une quelconque des revendications 1 à 17.

27. Utilisation selon la revendication 26, dans laquelle l'ingrédient polyol comprend au moins un polyéther liquide à température ambiante, un copolyéther, un polyester aliphatique ou au moins un polyalcène doté de groupes hydroxyles ou un polyalkadiène.

28. Utilisation selon la revendication 27, dans laquelle le composant polyol comprend au moins un polyéther ou copolyéther à base d'oxyde d'éthylène, d'oxyde de propylène ou de tétrahydrofurane ayant le cas échéant au moins une chaîne latérale greffée dérivée d'acrylnitrile ou de styrol.

29. Utilisation selon la revendication 27, dans laquelle le composant A comprend un adipate de polyalkylène et/ou un carbonate de polyalkylène.

30. Utilisation selon la revendication 27, dans laquelle le composant polyol comprend un polybutadiène liquide à température ambiante contenant des groupes hydroxyles.

31. Utilisation d'un composant selon l'une quelconque des revendications 26 à 30, dans laquelle le composant comprend :
suffisamment d'eau, jusqu'à excédent ;
0 - 5 % de catalyseur;
0 ― 3 % de pigment ;
0 ― 30 % d'agent thixotrope ;
0 ― 50 % d'une matière solide dispersée inorganique, comme par ex. une charge et/ou un agent d'adhésion, notamment CaCO₃ et/ou un ignifugeant ;
0 - 70 % d'une matière solide dissoute inorganique ou organique, comme par ex. d'un extendeur et/ou d'un additif courant pour modifier les propriétés physico-chimiques de la mousse ;
0 - 95 % d'un composé non réactif organique, comme par ex. d'un agent de mise au point des propriétés de surface de la mousse, notamment du carbonate de propylène d'un plastifiant ou d'un ignifugeant ;
0 - 50 % d'un allongeur de chaîne, comme par ex ; le diaminohexane;
0 - 25 % d'un composé Zerewitinov actif à plusieurs fonctions ; et
0 - 20 % d'un agent imperméabilisant.

32. Utilisation d'un composant isocyanate pour un matériau à deux composants moussables comprenant au moins un composé isocyanate à deux fonctions à titre de constituant principal, pour produire des objets moussés à base de polyuréthane d'une dureté Shore A < 30, à partir d'un matériau à deux composants selon l'une quelconque des revendications 1 à 21.

33. Utilisation selon la revendication 32, dans laquelle l'ingrédient de composé isocyanate est constitué essentiellement d'un prépolymère à deux fonctions à terminaisons isocyanates, notamment au moins d'un produit de transformation de diisocyanate de diphénylméthane et respectivement d'oligomères de diisocyanate de diphénylméthane avec du di- et/ou tripropylèneglycol et/ou au moins un produit de transformation à base de diisocyanate de diphénylméthane ou respectivement du prépolymère désigné ci-dessus, avec au moins un polyol.

34. Utilisation selon la revendication 28, dans laquelle l'ingrédient isocyanate comprend un diisocyanate de diphénylméthane modifié urétonimine et/ou son produit de transformation avec au moins un polyol.

35. Joint de mousse polyuréthane d'une dureté Shore A <30 produit par le moussage libre d'un matériau à deux composants selon l'une quelconque des revendications 1 à 25.

36. Couche de polyuréthane d'une dureté Shore A < 30 produite par le moussage libre d'un matériau à deux composants selon l'une quelconque des revendications 1 à 25.

37. Procédé pour produire un objet en mousse de polyuréthane d'une dureté Shore A < 30 notamment un joint, une couche ou objet semblable, dans lequel un mélange des composants A et B selon l'une quelconque des revendications 1 à 25 non encore porté à réaction est appliqué, soufflé ou injecté ou autre sur un support à doter d'un joint, d'une couche ou autre et laissé à un moussage libre.

38. Procédé selon la revendication 27 dans lequel le mélange encore non réactif est appliqué en surface notamment sur une surface plane ou courbe.

39. Procédé pour produire un objet en mousse de polyuréthane d'une dureté Shore A < 30 dans lequel un mélange des composants A et B selon l'une quelconque des revendications 1 à 25 encore non réactif est introduit dans un moule, le cas échéant ouvert et porté à réaction, et ensuite l'objet moussé est retiré du moule.
